# EUROPEAN PATENT APPLICATION

(11) **EP 2 228 984 A2**
(43) Date of publication of application: **15.09.2010**
(21) Application number: 10153289.3
(22) Date of filing: 11.02.2010
(51) Int. Cl.: H04N 5/44, H04N 7/01

(54) **Moving image output method and moving image output apparatus**

(30) Priority: 18.02.2009 JP 2009035099
(71) Applicant: Sony Ericsson Mobile Communications AB, 221 88 Lund (SE)
(72) Inventor: Tokutake, Kenji, TOKYO 108-0075 (JP)
(74) Representative: Jackson, Jonathan Andrew

(57) **Abstract**

A moving image output method includes the steps of:
detecting the difference between adjacent frames of moving image data; determining the level of each frame of the moving image data based on the difference detected;
monitoring predetermined various conditions; and selectively executing three operation modes based on the result of the monitoring. The three operation modes are a normal mode in which video output data is output with the number of frames of the moving image data not increased or decreased, a skipping mode in which a particular frame of the moving image data is skipped based on the level of each frame of the moving image data, and a high quality mode in which an intermediate frame is generated and inserted between the adjacent frames for which the difference is equal to or greater than a predetermined value.

## Description

### BACKGROUND OF THE INVENTION

### 1. Field of the Invention

The present invention relates to reproduction of a moving image and, more particularly, to a moving image output method and a moving image output apparatus.

### 2. Description of the Related Art

In the technical field concerning reproduction of a moving image, Japanese Patent No. 4139430 discloses a technique for performing additional frame insertion and edge enhancement on an image output from a decoder unit based on motion vector information output during reproduction of a moving image in order to improve the image quality of the reproduced image.

### SUMMARY OF THE INVENTION

In recent years, processors for reproducing a moving image have been improved significantly in performance and the system has become complicated. In such a situation, an effective approach of considering the performance of the entire system is necessary. For example, in a moving image output apparatus in a mobile environment where power consumption is strictly limited, the balance between the battery remaining level as a battery state, the CPU load, the content quality, and other conditions is important.

The related art above aims at only the improvement of the quality of a reproduced moving image and does not satisfy such demand.

It is desirable to provide a moving image output method or apparatus that reduces power consumption without degrading reproduced moving image quality significantly and improves image quality effectively, in response to the state of the moving image output apparatus.

According to an embodiment of the present invention, there is provided a moving image output method including the steps of detecting the difference between adjacent frames of moving image data; determining the level of each frame of the moving image data based on the difference detected; monitoring predetermined various conditions; and selectively executing three operation modes based on the result of the monitoring. The three operation modes are a normal mode in which video output data is output with the number of frames of the moving image data not increased or decreased, a skipping mode in which a particular frame of the moving image data is skipped based on the level of each frame of the moving image data, and a high quality mode in which an intermediate frame is generated and inserted between the adjacent frames for which the difference is equal to or greater than a predetermined value.

A motion vector is extracted as the difference between a first frame and a second frame and an intermediate frame between the first frame and the second frame can be generated based on the image of the first frame and the dividing value of the motion vector.

The predetermined various conditions include at least one of whether the power state equals a predetermined state, whether the display window of an application is focused, whether the CPU load is greater than a predetermined value, and whether the content quality is further improvable.

According to the embodiment of the present invention, there is provided a moving image output apparatus including a decoder decoding encoded moving image data; a difference extracting means for extracting the difference between adjacent frames of the moving image data decoded; a monitoring means for monitoring predetermined various conditions; and an optimizer selectively executing three operation modes based on the monitoring result. The three operation modes are a normal mode in which video output data is output with the number of frames of the moving image data not increased or decreased, a skipping mode in which a particular frame of the moving image data is skipped based on the level of each frame of the moving image data, the level being determined based on the difference detected, and a high quality mode in which an intermediate frame is generated and inserted between the adjacent frames for which the difference is equal to or greater than a predetermined value.

According to the embodiment of the present invention, predetermined various conditions are monitored and the operation mode for controlling the number of frames of moving image data is switched based on the monitoring result, so that the power consumption can be reduced or the image quality can be improved effectively in response to the apparatus state.

### BRIEF DESCRIPTION OF THE DRAWINGS

Fig. 1 illustrates major functions of a data processing apparatus for achieving a moving image output optimization system according to an embodiment of the present invention.
Figs. 2A to 2D schematically show the frame optimization according to the embodiment of the present invention.
Fig. 3 illustrates a method of creating an intermediate frame in a high quality mode according to the embodiment of the present invention.
Fig. 4 is a flowchart illustrating a procedure for mode determination made by an optimizer according to the embodiment of the present invention.

### DESCRIPTION OF THE PREFERRED EMBODIMENT

An embodiment of the present invention will now be described with reference to the drawings.

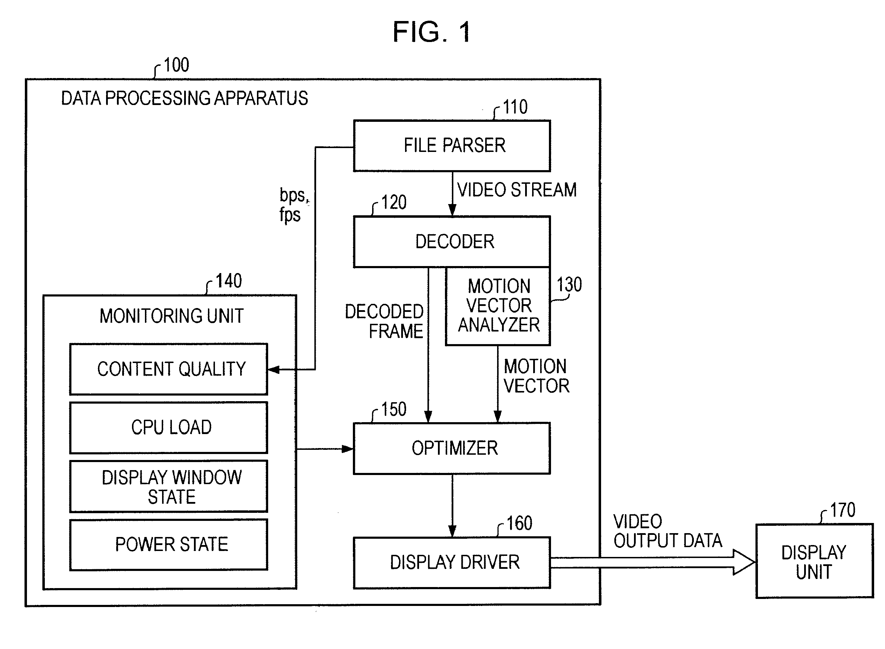

Fig. 1 illustrates major functions of a data processing apparatus 100 for achieving a moving image output optimization system according to an embodiment of the present invention. The data processing apparatus 100 includes hardware components such as a CPU (not shown), storage devices (such as a ROM, a RAM, an HDD, and a DVD) (not shown), an input/output apparatus (not shown), and a communication apparatus (not shown).

The data processing apparatus 100 includes a file parser 110, a decoder 120, a motion vector analyzer 130, a monitoring unit 140, an optimizer 150, and a display driver 160. Video output data is output by the data processing apparatus 100 and transmitted to a display unit (display) 170 to be displayed as a moving image.

The file parser 110 analyzes the data of a moving image file that is input externally or stored in an internal storage device (not shown), and outputs a video stream to the decoder 120. The video stream is packed-encoded moving image data.

The decoder 120 decodes the received video stream. The motion vector analyzer 130 extracts a motion vector included in the macro block layer in a frame. At this time, all frames including synchronization frames and differential frames are decoded.

All the decoded frames and the quantified motion vectors (differential information) from the motion vector analyzer 130 are passed to the optimizer 150. The optimizer 150 selects prioritized frames from all the frames and generates an intermediate frame between certain frames. The prioritized frames are not skipped in the skipping mode, which will be described later.

More specifically, the optimizer 150 selectively executes, based on the result of monitoring described later by the monitoring unit 140, three operation modes: a normal mode in which video output data is output with the number of frames of moving image data not increased or decreased, a skipping mode in which a particular frame of the moving image data is skipped based on the level of the each frame of the moving image data determined based on the difference detected, and a high quality mode in which an intermediate frame is generated and inserted between the adjacent frames for which the difference is equal to or greater than a predetermined value.

For this purpose, the optimizer 150 basically determines the priority of each frame due to the amount of predicted motion. However, the synchronization frame is necessary during recording, so its priority is set to a value large enough to prevent the frame being skipped. (In other words, the priority of the synchronization frame is set to a value equal to the priority threshold of a prioritized frame so that the synchronization frame is not skipped.)

The optimizer 150 compares the value of the motion vector given as the difference between adjacent frames of the decoded moving image data with a predetermined reference value (threshold). If the value of the motion vector is greater than the reference value, the corresponding frame is determined to have a large difference and is treated as a prioritized frame (frame with a large amount of predicted motion). The first frame of moving image data is assumed to have the maximum priority.

In the present embodiment, the monitoring unit 140 is provided to find the optimum measure in a complicated system. The monitoring unit 140 inputs, to the optimizer 150, information to make a decision on whether to improve the image quality of the system or to reduce the processing load of the system by lowering the refresh rate. The information includes the following.
(1) Power state: Remaining battery level in this example
(2) Display window state (focus/back window): Whether the video output window on the display screen is focused in this example
(3) CPU load: Load on the CPU
(4) Content quality: Bit rate (bps) and frame rate (fps) of a video stream

In the system, the optimizer 150 makes a shift to a proper operation mode based on the information from the monitoring unit 140. The operation modes other than the normal mode that are adopted by the present embodiment will be described below. The process in the normal operation mode is equivalent to the process performed when the embodiment of the present invention is not applied.

### Skipping mode

In the skipping mode, the prioritized frames selected are passed to the display unit 170 and the frames with a small difference are not passed to the display unit 170. Only the frames with a large difference are displayed preferentially in this way to lower the refresh rate efficiently, thereby reducing load during video output.

### High quality mode

In the high quality mode, one or more frames are inserted before a prioritized frame to increase the number of frames between frames with a large amount of motion, thereby improving the quality of a moving image.

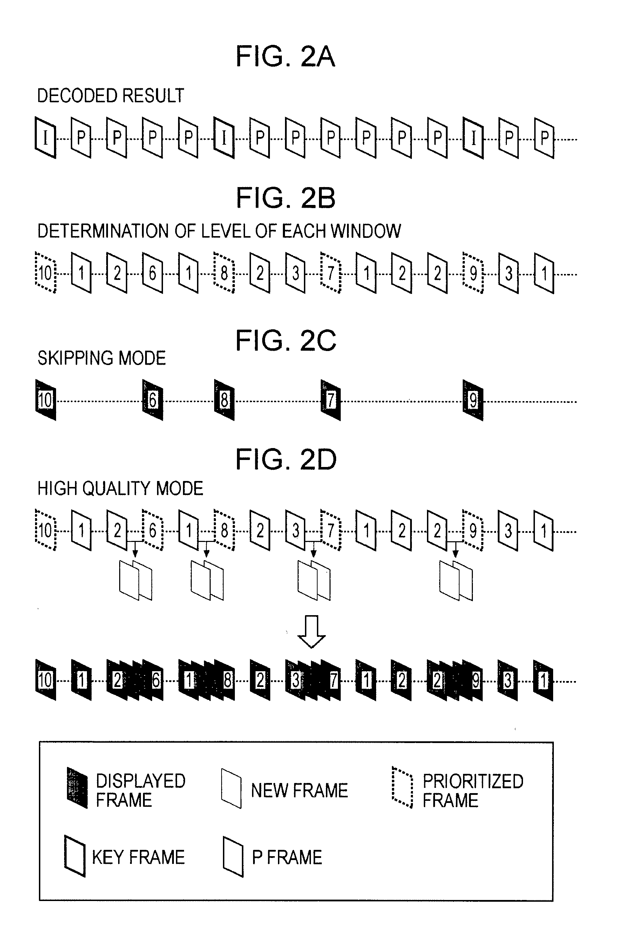

Figs. 2A to 2D schematically show the frame optimization according to the present embodiment.

As shown in Fig. 2A, the decoder 120 decodes the entire video stream received. At this time, the motion vector analyzer 130 extracts motion vectors from macro block layers to prepare for data selection.

In Fig. 2B, for each of synchronization frames and each of differential frames in Fig. 2A, the priority of the current frame is determined based on the difference between the previous frame and the current frame. In this example, the frame priority is set to one of levels 1 to 10 (the larger the difference, the larger the level).

At this time, synchronization frames (I frames) and differential frames (P frames) are selected based on the same reference and processed according to the actual difference. In the following example, a frame with level 6 or higher is assumed to have a large amount of motion.

Fig. 2C shows the frames extracted by the optimizer 150 in the skipping mode. In the skipping mode, the refresh rate can be reduced by selecting frames based on the actual difference while maintaining the video quality as high as possible. As a result, the power consumption can be reduced. In this example, only the frames (prioritized frames) with level 6 or higher are selected and the other frames are excluded.

In the high quality mode, as shown in Fig. 2D, one or more intermediate frames are generated between a prioritized frame and the previous frame, based on these frames. A differential frame is generated as an intermediate frame of this type. This intermediate frame is inserted before a prioritized frame to achieve high quality video display that does not degrade even during rapid motion.

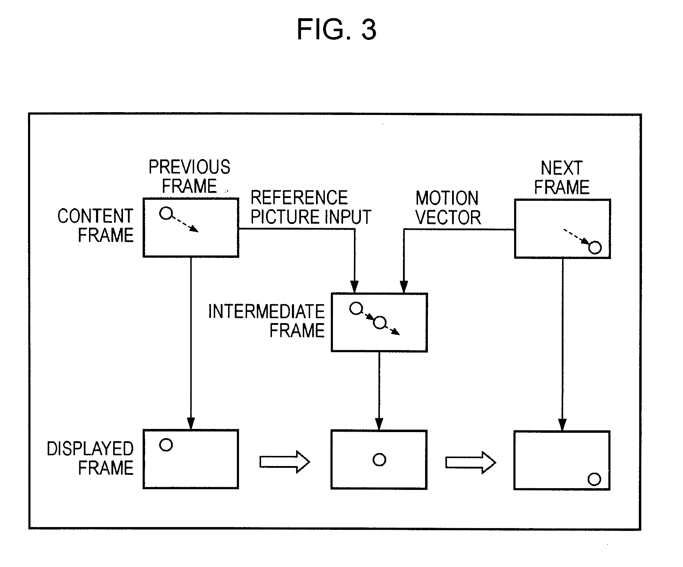

As shown in Fig. 3, the related art can be used to create intermediate frames in the high quality mode. In the present embodiment, a motion vector is extracted as the difference between the first frame and the second frame and intermediate frames between the first frame and the second frame are generated based on the image of the first frame and the dividing value of the motion vector. That is, the intermediate value of the motion vector obtained from the previous frame and the next frame is used to generate intermediate frames corresponding to only the motion of an object. More specifically, as in normal decoding, the previous frame is used as the reference image (reference picture) and motion vector information is obtained from the subsequent frame. At this time, the detected motion vector value divided by the number of intermediate frames to be generated is used to create intermediate frames. Half of the detected motion vector value is used to insert one frame, one third of the detected motion vector value is used to insert two frames, and one quarter of the detected motion vector value is used to insert three frames. As described above, if the number of frames to be inserted is n, the dividing value equals n+1. If all frames are processed directly to generate intermediate frames, the amount of processing increases. On the other hand, if motion vector information is used to generate intermediate frames, the amount of processing reduces.

The number of intermediate frames inserted between adjacent frames may be determined in advance as a constant value or may be changed dynamically depending on the difference between the adjacent frames as long as the changed frame rate does not exceed the maximum frame rate applicable to the display unit.

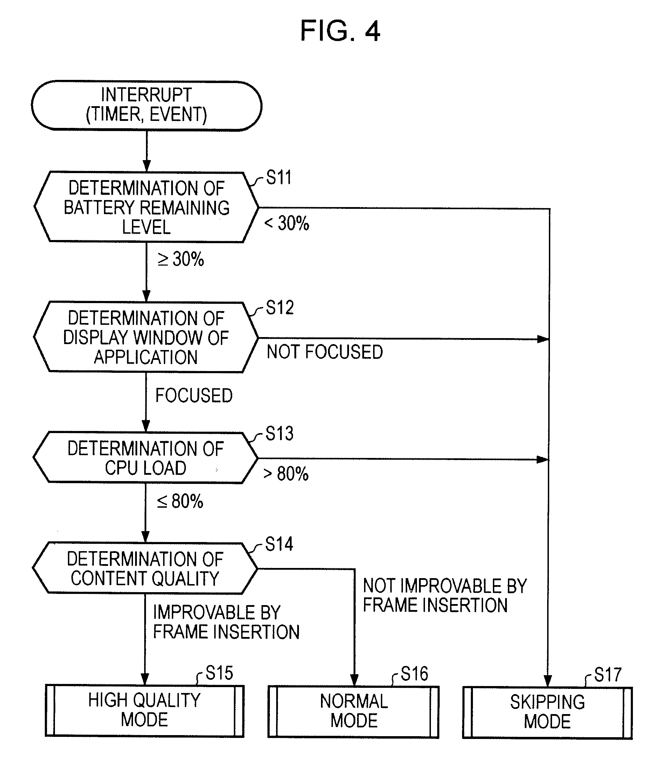

Next, mode determination made by the optimizer 150 based on the information obtained by the monitoring unit 140 will be described with reference to Fig. 4. This mode determination is started by an interrupt issued from the data processing apparatus 100 to the CPU at regular intervals (for example, several seconds) or on occurrence of a predetermined event such as a change in the window focus state.

As shown in the flowchart in Fig. 4, determination items are processed according to their priorities.

First, the battery remaining level is checked (S11).

If the battery remaining level is less than a predetermined value, the operation enters the skipping mode (S17). In the skipping mode, only the prioritized frames are output to the display unit 170 as shown in Fig. 2C to reduce power consumption.

If the battery remaining level is determined to be equal to or greater than the predetermined value, the display window of an application is checked (S12). In this step, whether the target display window of the application for displaying a moving image is focused (activated) is determined. If the window is not focused, the user is assumed not to note the application and the operation enters the skipping mode (S17).

If the window is focused, the CPU load is checked (S13). If the CPU load is determined to be greater than a predetermined value (80% in this example), the operation enters the skipping mode (S17).

If the CPU load is determined to be equal to or less than the predetermined value, the content quality is determined (S14). In this step, whether the content quality can be improved is checked. If the content quality is improvable, the operation enters the high quality mode (S15). If the content quality is not improvable, the operation enters the normal mode (S16). In this determination, the frame rate of the content is compared with the maximum frame rate applicable to the display unit 170. The content quality is improvable only when the frame rate of the content is less than the maximum frame rate applicable to the display unit 170. For example, when the frame rate of the content is 15 FPS (a period of 66 milliseconds) and the maximum frame rate applicable to the display unit 170 is 60 FPS (a period of 16 milliseconds), the operation can enter the high quality mode. In the high quality mode, display can be updated temporarily at 30 FPS (in a period of 33 milliseconds) in a section in which frame interpolation is necessary.

According to the present embodiment, in outputting of a moving image in a mobile environment where power consumption is strictly limited, an optimum video output system can be achieved without changing the video data of the content.

All frames are decoded at all times, so it is possible to switch the operation mode immediately after the system state changes.

The present application contains subject matter related to that disclosed in Japanese Priority Patent Application JP 2009-035099 filed in the Japan Patent Office on February 18, 2009, the entire content of which is hereby incorporated by reference.

The preferred embodiment of the present invention has been described above, but various modifications or changes can be made other than the embodiment. For example, the specific values shown in steps S11 and S13 may be changed to other values.

## Claims

1. A moving image output method comprising the steps of:
detecting a difference between adjacent frames of moving image data;
determining a level of each frame of the moving image data based on the difference detected;
monitoring predetermined various conditions; and
selectively executing three operation modes based on a result of the monitoring, the three operation modes being a normal mode in which video output data is output with the number of frames of the moving image data not increased or decreased, a skipping mode in which a particular frame of the moving image data is skipped based on the level of each frame of the moving image data, and a high quality mode in which an intermediate frame is generated and inserted between the adjacent frames for which the difference is equal to or greater than a predetermined value.

2. The moving image output method of claim 1, wherein a motion vector is extracted as a difference between a first frame and a second frame and an intermediate frame between the first frame and the second frame is generated based on an image of the first frame and a dividing value of the motion vector.

3. The moving image output method of claim 1 or 2, wherein the various conditions are at least one of whether a power state equals a predetermined state, whether a display window of an application is focused, whether CPU load is greater than a predetermined value, and whether content quality is further improvable.

4. The moving image output method of claim 3, wherein the power state is first checked, a shift to the skipping mode is made when the power state equals the predetermined state or the display window of the application is checked when the power state does not equal the predetermined state, a shift to the skipping mode is made when the display window of the application is not focused or the CPU load is checked when the display window of the application is focused, a shift to the skipping mode is made when the CPU load is greater than the predetermined value or whether the content quality is further improvable is checked when the CPU load is equal to or less than the predetermined value, and a shift to the normal mode is made when the content quality is not improvable or a shift to the high quality mode is made when the content quality is improvable.

5. A moving image output apparatus comprising:
a decoder decoding encoded moving image data;
a difference extracting means for extracting a difference between adjacent frames of the moving image data decoded;
a monitoring means for monitoring predetermined various conditions; and
an optimizer selectively executing three operation modes based on a result of the monitoring, the three operation modes being a normal mode in which video output data is output with the number of frames of the moving image data not increased or decreased, a skipping mode in which a particular frame of the moving image data is skipped based on the level of each frame of the moving image data, the level being determined based on the difference detected, and a high quality mode in which an intermediate frame is generated and inserted between the adjacent frames for which the difference is equal to or greater than a predetermined value.

6. The moving image output apparatus of claim 5, wherein the difference extracting means extracts a motion vector as a difference between a first frame and a second frame and the optimizer generates an intermediate frame between the first frame and the second frame based on an image of the first frame and a dividing value of the motion vector.

7. The moving image output apparatus of claim 5 or 6, wherein the various conditions are at least one of whether a power state equals a predetermined state, whether a display window of an application is focused, whether CPU load is greater than a predetermined value, and whether content quality is further improvable.

8. The moving image output apparatus of claim 7, wherein the optimizer first checks the power state, the optimizer makes a shift to the skipping mode when the power state equals the predetermined state or the optimizer checks the display window of the application when the power state does not equal the predetermined state, the optimizer makes a shift to the skipping mode when the display window of the application is not focused or the optimizer checks the CPU load when the display window of the application is focused, the optimizer makes a shift to the skipping mode when the CPU load is greater than the predetermined value or the optimizer checks whether the content quality is further improvable when the CPU load is equal to or less than the predetermined value, and the optimizer makes a shift to the normal mode when the content quality is not improvable or the optimizer makes a shift to the high quality mode when the content quality is improvable.

9. A moving image output apparatus comprising:
a decoder decoding encoded moving image data;
a difference extractor extracting a difference between adjacent frames of the moving image data decoded;
a monitoring unit monitoring predetermined various conditions; and
an optimizer selectively executing three operation modes based on a result of the monitoring, the three operation modes being a normal mode in which video output data is output with the number of frames of the moving image data not increased or decreased, a skipping mode in which a particular frame of the moving image data is skipped based on the level of each frame of the moving image data, the level being determined based on the difference detected, and a high quality mode in which an intermediate frame is generated and inserted between the adjacent frames for which the difference is equal to or greater than a predetermined value.
